# NEW EUROPEAN PATENT SPECIFICATION

(11) **EP 1 667 304 B2**
(45) Date of publication and mention of the opposition decision: **08.09.2021**
(45) Mention of the grant of the patent: 27.06.2012
(21) Application number: 04405747.9
(22) Date of filing: 02.12.2004
(51) Int. Cl.: H02H 7/26, H02J 13/00

(54) **Transmission of protection commands to a remote tripping device**
Übertragung von Schutzbefehlen zu einer entfernten Auslöseeinrichtung
Transmission d'une commande de protection à un dispositif de déclenchement à distance

(43) Date of publication of application: 07.06.2006
(73) Proprietor: ABB Power Grids Switzerland AG, 5400 Baden (CH)
(72) Inventor: Strittmatter, Michael, ch-5304 Endingen (CH)
(74) Representative: Vossius & Partner Patentanwälte Rechtsanwälte mbB

(56) References cited:
- EP-A- 1 335 469
- EP-A1- 1 337 024
- GB-A- 1 135 564
- GB-A- 1 135 564
- US-A- 3 643 160
- SPIESS H: "NSD 70 - A NEW FAMILY OF PROGRAMMABLE, DIGITAL PROTECTION SIGNALLING EQUIPMENT" ABB REVIEW, ABB ASEA BROWN BOVERI, ZURICH, CH, no. 6, January 1992 (1992-01), pages 3-10, XP000311533 ISSN: 1013-3119
- "SWT 3000 Equipment Manuel - Chapter 1, Description of Function", August 2002 & Flyer "Product Enhancements SWT 3000", order nr. 50001-U336-A29-X-7600, September 2003 & Print order for flyer D1b, 2100 pcs., order no. 50001-U336-A29-X-7600, September 2003
- Equipment Manual ESB 2000i - Chapter 10: ISWT3000, May 2004

## Description

### FIELD OF THE INVENTION

The invention relates to the field of protection technology for high-voltage and medium-voltage networks. It departs from a system for transmitting protection commands to a remote tripping device as described in the preamble of claim 1.

### BACKGROUND OF THE INVENTION

Remote tripping devices or protection signal transmission devices, also known as teleprotection devices, are used for transmitting protection or switching commands for distance protection in electrical high-voltage and medium-voltage networks and systems. Protection commands result, for example, in a circuit breaker being opened directly or indirectly and, in consequence in electrical disconnection of a selected part of the network or of the system. Conversely, other protection commands result in the opening of a circuit breaker in the remote station being prevented or blocked. Protection commands must be transmitted, for example, from one point of a power transmission or distribution network to another. To this end, a transmitter in a remote tripping device produces analog signals in accordance with the protection commands, which analog signals are transmitted via a physical signal link. A receiver in another remote tripping device detects the transmitted signals and determines the corresponding number and nature of the protection commands.

The analog signals are comprised, for example, in a frequency band or analog channel with voice frequency bandwidth situated between 0 and 4 kHz. They are either transmitted directly in this frequency band, or are modulated onto a carrier frequency of e.g. 100 kHz at the transmitter and demodulated at the receiver. The physical signal link may involve radio waves or fiber optics, but preferably, the protection signals are transmitted over pilot wires, analog leased lines, voice channels of analog or digital communication systems, or even high-voltage electricity transmission lines, the latter being known as power line communication (PLC). At the receiver, the presence or absence of individual tones at different frequencies must be detected in a received analog signal as described in detail further below.

Depending on the application, purpose or nature of the protection command, different requirements are placed on the signal transmission and detection, which can be characterized by the transmission time and bandwidth, as well as by the following parameters:
- Puc: "Probability of an unwanted command" or security value, i.e. the probability that a command is received erroneously owing to disturbances on the signal link, even though no command has been sent by the transmitter. A low Puc value corresponds to high transmission security.
- Pmc: "Probability of a missing command" or dependability value, i.e. the probability that a command which has been transmitted is not received. A low Pmc value corresponds to high transmission dependability.

Disturbances in the transmission must not simulate any protection commands in a quiescent situation and, on the other hand when a protection command occurs, must not unacceptably delay the latter, or even lead to it being lost. High security and high dependability with a short transmission time and a narrow bandwidth at the same time are contradictory requirements. However, one variable can always be improved at the expense of the other characteristics. The compromise is governed by the application as detailed e.g. in the relevant standard IEC 60834-1 Ed. 2.0, 1999, entitled "Teleprotection equipment of power systems - Performance and testing". Permissive tripping, for instance, requires short transmission times with high dependability and reasonable security. Applications with direct switch tripping, on the other hand, demand very high security and dependability, with the transmission time requirements being less stringent.

In the patent application EP-A 1335469, a remote tripping device is disclosed, according to which a protection command or a combination of protection commands are coded by a signal comprising a predetermined combination of tones or frequencies, and wherein each protection command is assigned a predetermined minimum safety and/or security level in order to meet the requirements of the application that the command is used for (e.g. blocking, permissive or direct tripping). Various coding schemes are enumerated, and a parallel or conjoint implementation of several application schemes, albeit restricted to distinct tones, is envisaged.

GB-A 1 135 564 discloses an electric signaling system for transmission, over ordinary telephone lines, of a single tripping command to a receiver by means of a frequency alternation corresponding to coded FSK. The receiver in turn can operate in a "rapid" or "secure" way, wherein the latter way corresponds to a lower Puc value in the sense given above.

### DESCRIPTION OF THE INVENTION

It is an objective of the invention to increase the number of protection commands that may be transmitted over a given transmission band with a limited number of tones or frequencies and without increasing the transmission power. These objectives are achieved by a system for and a method of transmitting protection commands according to the claims 1 and 4. Further preferred embodiments are evident from the dependent patent claims.

According to the invention, at least two coding, mapping or operating schemes or principles are jointly implemented in a transmitter to define how a protection command or a combination of two or more protection commands is translated or mapped to a tone or a combination of tones. Two of the schemes thereby do share at least one tone, i.e. their mapping principles involve a joint target frequency and signals originating from the two schemes may comprise a joint frequency component.

In a first preferred variant of the invention, related protection commands that belong to the same application or serve a similar purpose are assigned the same priority and mapped according to the same operating scheme.

In a second preferred variant of the invention, the signal link is a voice-grade channel, and in particular the power line itself. The optimized signal-to-noise ratio of the inventive tone-sharing procedure enables the use of power lines, even though the power line represents a rather noisy medium in particular at those instants when protection commands need to be distributed.

In a further advantageous variant of the inventive method, the guard signal is interrupted and the maximum output power is allocated to the command signal.

In a further advantageous variant of the inventive method, a receiver of a transmitted signal has detectors allocated to each of a plurality of tones and enabled for detecting the presence of a tone-specific component in the transmitted signal. Each protection command is assigned a predetermined security level and is coded, individually or in combination with other protection commands, in a command signal. A reception of the protection command is acknowledged if the components of the transmitted command signal are detected with a safety value exceeding a safety threshold corresponding to the security level of the protection command.

Upon reception of a signal coding a combination of protection commands, it is thus possible to detect individual protection commands in accordance with different minimum security levels. A protection command can thus always be transmitted optimally for the intended application, i.e. the parameters for security, dependability and transmission time are individually configurable for the protection command.

### BRIEF DESCRIPTION OF THE DRAWINGS

The subject matter of the invention will be explained in more detail in the following text with reference to preferred exemplary embodiments that are illustrated in the attached drawings, in which:
Fig.1 schematically shows the transmission of protection commands between remote tripping devices,
Fig.2 shows a guard and a command signal for a single protection command in the time and frequency domain,
Fig.3 shows a guard and a command signal for a plurality of protection commands according to a variable-tone coding scheme:
Fig.4 idem for a single-tone coding scheme,
Fig.5 idem for a dual-tone coding scheme,
Fig.6 idem for a triple-tone coding scheme,
Fig.7 idem for a FSK or alternating single-tone coding scheme,
Fig.8 shows a signal flow diagram for a receiver, and
Fig.9 depicts various safety threshold values for a frequency detector.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

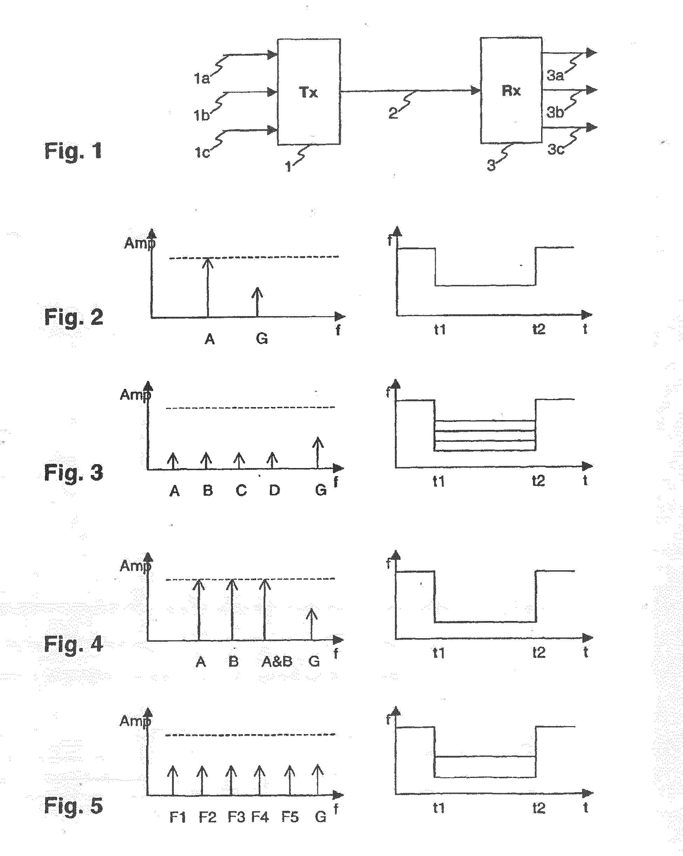

Fig.1 shows, schematically, the transmission of protection commands between remote tripping devices. A transmitter 1 has a number of command inputs 1a, 1b, 1c as inputs for binary protection commands. On the basis of one or several protection commands entering at a time, the transmitter 1 produces an analog signal, which is transmitted via the signal link 2. A receiver 3 receives the transmitted signal, reconstructs the appropriate protection command or commands, and emits these via command outputs 3a, 3b, 3c.

Fig.2 shows a quiescent or guard signal G and a command signal A, corresponding to a single protection command and represented or coded by a single tone at a first frequency, in the frequency domain and in the time domain. An amplitude axis in the illustration is annotated Amp, a frequency axis is annotated f and a time axis is annotated t. In a quiescent situation, i.e. when no protection command need be transmitted, a guard signal G is transmitted continuously at a second frequency. The receiver 3 detects the presence or the absence of the command signal A and of the guard signal G continuously and, if the signal quality is inadequate or if both are received simultaneously or neither of the two is received, produces an alarm signal. When a command occurs, the transmitting remote tripping device interrupts the guard signal G in order to assign the maximum output power to the command signal A. In Fig.2, this occurs between the times t1 and t2. The command signal A can be transmitted at a higher level than the guard signal G, generally at the maximum available output power represented by the dashed line in Fig.2. When the receiver identifies the lack of guard signal G and at the same time a valid command signal A with a sufficient signal quality at an acceptable noise level, then the command coded by the command signal is identified as genuine.

In order to transmit a plurality of protection commands, either alone or in combination, over a channel of limited bandwidth, several coding, mapping or operating schemes are known. They essentially describe the mapping of a single or a combination of protection commands onto the tones or frequencies available in the transmission band, i.e. the creation of a corresponding protection signal, and will be briefly described in the following.

Fig.3 shows the transmission of a number of protection commands using a dedicated single-tone signal at a dedicated frequency for each command A, B, C, D. If it is intended to transmit a number of commands at the same time, the available transmission power is shared between the corresponding single-tone signals. Fig.3 shows the simultaneous transmission of four protection commands, in which case only a quarter of the maximum signal amplitude, as shown by the dashed line, is thus available for each of the four tones. The receiver characteristics relating to the transmission time, safety and/or security as well as dependability can be set individually for each protection command, and the bandwidth required or, in case the bandwidth is fixed, the transmission time increases linearly with the number of protection commands. On the other hand, the signal-to-noise ratio is drastically worse and the transmission time increased and/or the dependability decreased as compared to the case of only one single-tone signal transmitted at a time with the maximum available output power. Correspondingly, the signal-to-noise ratio for this **variable-tone** coding scheme depends on the number of protection commands to be transmitted simultaneously. Contrary to this, the signal-to-noise ratio is the same for any combination of commands in the operating principles introduced next.

Fig.4 shows a **single-tone** transmission by means of one, and only one, tone per protection command A, B, as well as per any protection command combination A&B. When a command occurs, the maximum transmission power at an individual frequency is in each case available, in order to produce the maximum possible signal-to-noise ratio in the receiver. However, bandwidth and further detectors are required for each protection command C that is additionally to be transmitted, and for its possible combinations with the other protection commands A&C, B&C, A&B&C, resulting in e.g. the provision of a total of seven detectors for three protection commands.

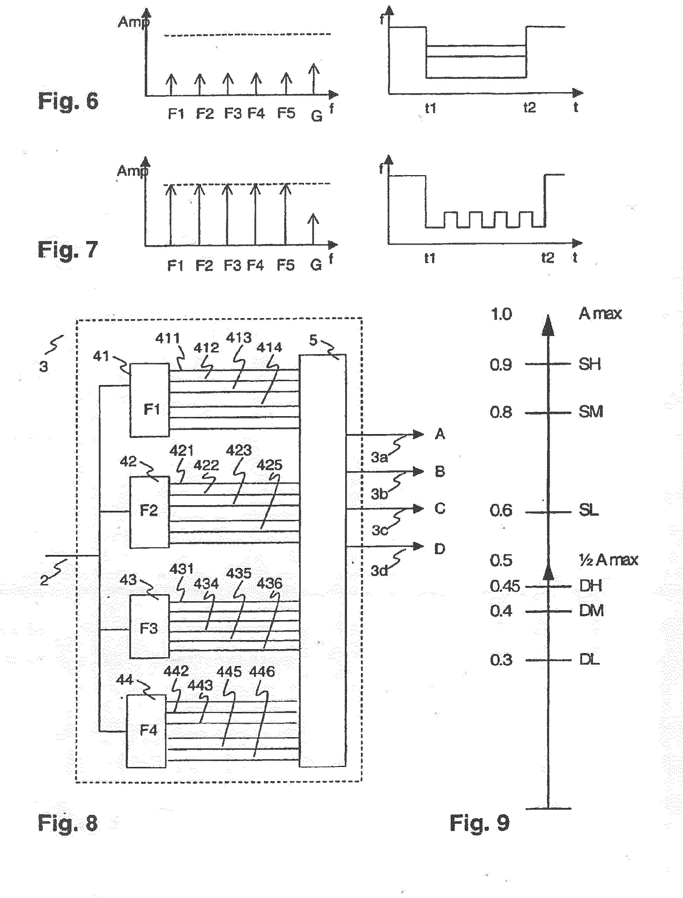

Fig.5 and Fig.6 show **dual- and triple-tone** coding transmission, based on a combination or superposition of two or three tones, respectively, out of a totality of five frequencies F1 to F5 for each protection command and for each protection command combination. Dual-tone signals are transmitted at half the maximum amplitude, and triple-tone signals are transmitted at a third of the maximum amplitude. An individual protection command or a specific combination of protection commands is represented by or mapped onto one of the n*(n-1)/2 pairs or one of the n*(n-1)*(n-2)/6 triplets of tone or frequency combinations, where n designates the number of available tones. This total number of combination options should be superior to the 2^{m}-1 combinations of m protection commands. Upon the addition of a supplemental protection command, frequency detectors may have to be added occasionally, thus increasing slightly the bandwidth or, if the bandwidth is fixed, the transmission time required. The effect of discrete disturbance or interference signals on the transmitted signals is reduced, as two or more tones must be detected simultaneously at the receiver to identify a genuine command. Between the tones of a pair or triplet, a large difference in the received amplitude due to frequency-dependent transmission or attenuation characteristics of the analog signal link is to be avoided.

Fig.7 shows **coded FSK** (Frequency Shift Keying) transmission by means of alternating single-tone signals coding a single protection command or a combination of protection commands. By way of example, periodic switching takes place between the tones or frequencies F1 and F2 for the protection command A, and between F1 and F3 for the combination A&B. As above, following the addition of a supplemental protection command, frequency detectors may have to be added occasionally, thus increasing slightly the bandwidth or, if the bandwidth is fixed, the transmission time required. As the maximum power goes into one tone at a time, the signal-to-noise ratio is the same as in the case of single-tone signals, i.e. maximum. A possible difference in the received amplitudes is of less impact to the evaluation in the receiver than in the abovementioned case of dual or triple tone coding. On the other hand, the receiver has to detect two frequencies serially before a protection command is acknowledged, i.e. the transmission time is almost doubled. Some combinations of tones or frequencies are prohibited, as the change from a first to a second combination at the sender might inadvertently be identified as a third combination representing a third protection command and leading e.g. to unwanted tripping.

Each of the aforementioned operating principles involves a number of frequency detectors, depending on the number of commands that are to be transmitted either alone or in combination with others over the limited bandwidth of the analog signal link. In order to transmit a maximum number of protection commands with a minimum number of tones and detectors and thus optimizing transmission-time, two or more of the abovementioned distinct operating principles are assigned at least one common tone and frequency detector. In other words, at least one frequency detector is thus prepared to receive tones from different coding schemes. If the latter have different nominal signal amplitudes, the frequency detector has to have different threshold values for each scheme. The receiver is equipped with some logics and has knowledge about the coding schemes implemented in the transmitter, in order to identify the type of coding used and to deduce the commands transmitted. Preferably, all the tones available, with the exception of the one tone assigned to the guard signal, are used in exactly two distinct operating schemes.

The protection commands are naturally grouped according to the specific applications such as direct tripping, permissive tripping or blocking, and all the related commands belonging to one application are coded according to the specific scheme that corresponds best to the requirements of the application in terms of security, dependability, and/or transmission time. This enables the introduction of a prioritizing mechanism, preferring the commands of a certain application or, equivalently, a certain coding scheme over other commands or schemes. By way of example, coded FSK signals may be prioritized over dual-tone signals, which in turn may be privileged over single-tone signals. An ongoing transmission of low-priority-commands may even be suspended in favour of a more recent higher-priority-command.

According to a first embodiment of the invention, a tone-sharing implementation of concurrent single- and dual tone coding is carried out in accordance with the following table. The first column lists the individual protection commands as well as a number of combinations of the former as selected by the user. The other columns show which two out of a total of five tones are used for their coding, wherein the fifth tone F5 is assigned to the guard signal G. The four remaining frequencies are used to transmit two single-tone commands A, B, two dual-tone commands C, D, their respective combinations A&B and C&D, as well as a test command T. The test command generally has the lowest priority and is cyclically transmitted to test the state of the signal link. Without the inventive tone-sharing of the frequencies F1-F4, eight frequencies would be required to create the eight combinations listed in the table in single-tone, or six (i.e. five plus one guard) frequencies in dual-tone to create a maximum of eleven combinations. In the table below, a large "X" stands for the maximum amplitude, whereas a small "x" stands for half the maximum amplitude.

| **Injected Commands** | **Transmitted Freq.** | | | | |
|---|---|---|---|---|---|
| | **F1** | **F2** | **F3** | **F4** | **F5** |
| - | | | | | G |
| A | X | | | | |
| B | | X | | | |
| A&B | | | X | | |
| C | x | | | x | |
| D | | x | | x | |
| C&D | | | x | x | |
| T | x | | x | | |

In a second embodiment, dual-tone and coded FSK operating schemes are employed concurrently in conjunction with a total of six detectors. The five non-guard tones are shared among two applications comprising three (A, B, C) and two (D, E) commands, respectively, coded according to the dual-tone and coded FSK scheme as depicted in the table below. In order to generate the twelve combinations listed without tone-sharing, six plus one detectors in pure dual-tone and, due to the possibility of unwanted combinations at command changes, even more in pure coded FSK would be required. In the table below, a large "X" stands for the maximum amplitude and alternating transmission, whereas a small "x" stands for half the maximum amplitude and simultaneous transmission.

| **Injected Commands** | **Transmitted Freq.** | | | | | |
|---|---|---|---|---|---|---|
| | **F1** | **F2** | **F3** | **F4** | **F5** | **F6** |
| - | | | | | | G |
| A | x | x | | | | |
| B | | x | x | | | |
| C | | | x | x | | |
| A&B | x | | x | | | |
| A&C | x | | | x | | |
| B&C | | x | | x | | |
| A&B&C | x | | | | x | |
| D | | | | X | X | |
| E | | | X | | X | |
| D&E | | X | | | X | |
| T | X | | | | X | |

In a third embodiment, single-tone and coded FSK operating schemes are employed, sharing a total of 7 tones and detectors. Two single-tone commands A, B and one coded FSK command C are selected, as well as any combination of the three (e.g. A&C) as listed in the first column of the table below. A further restriction to be observed in the case of concurrent employment of single-tone and coded FSK schemes requires that any combined FSK signal (e.g. A&C) representing a combination with a single-tone command (A) involves the frequency (F1) of the latter. If the frequency (F1, F2) corresponding to the single tone command is transmitted first in the FSK combination A&C or B&C, the single tone command may be received without delay even when transmitted in combination. In the table below, the large "X" signifies that all signals are transmitted at full amplitude.

| **Injected Commands** | **Transmitted Freq.** | | | | | | |
|---|---|---|---|---|---|---|---|
| | **F1** | **F2** | **F3** | **F4** | **F5** | **F6** | **F7** |
| - | | | | | | | G |
| A | X | | | | | | |
| B | | X | | | | | |
| A&B | | | X | | | | |
| C | | | | X | X | | |
| A&C | X | | | X | | | |
| B&C | | X | | X | | | |
| A&B&C | | | X | X | | | |
| T | | | | | X | X | |

The tone-sharing operation principles as detailed above have the common feature that there is no a-priori capability to take into account different security requirements for two or more protection commands that are transmitted as a command combination. The presence of a command combination must, for example, always be evaluated with the security level of that individual command which has the most stringent security requirement. Since high security means a longer detection time, other individual commands in the command combination, whose security requirements are less stringent but which should be transmitted more quickly for this purpose, are unnecessarily delayed. A conventional frequency detector can be set for a particular transmission time or detector bandwidth and optimized for one single security level.

Fig.8 shows a signal flow diagram for a receiver that overcomes the aforementioned disadvantage by means of a modified frequency detector 41, 42, 43, 44 for each tone or frequency used in the transmission band. This type of frequency detectors is described in the above-referenced application EP-A 1335469 and does continuously integrate a particular frequency component of the received signal during a predetermined integration time or until a predetermined value of the integrated quantity is reached. Depending on the result of this integration, the detector assigns a tone-specific safety value to the received signal, the safety value being a measure of the probability that the corresponding tone is not received erroneously in the sense as described in the background section. The safety value is then compared to a number of safety thresholds stored in the detector. By way of example, if the respective tone-specific safety value at the signal detectors 41, 42 exceeds a first or low threshold DL for dual tone commands, this is indicated at detector outputs 411, 421 by activating the latter. If the respective safety value exceeds a second or medium threshold DM, then this is indicated at detector outputs 412, 422. If the respective safety value exceeds a third or high threshold DH, then this is indicated at detector outputs 413, 423. The values at the detector outputs are evaluated in linking logic 5 to form values of command outputs 3a, 3b, 3c, 3d which, when appropriate, indicate detection of the protection commands A, B, C, D.

Since each detector has a number of outputs corresponding to different safety thresholds DL, DM, DH for dual tone commands and SL, SM, SH for single tone or coded FSK commands, the detection of a protection command which has been transmitted in combination with other protection commands can be carried out selectively in accordance with the security level required for that protection command. This is done, for example, in accordance with the following table based on the aforementioned first embodiment. The first column additionally indicates that a low security level is predetermined for the transmission or for reception for the protection command A, a medium level is predetermined for the protection commands B and C, and a high security level is predetermined for the protection command D.

| **Injected Commands** | **Transmitted Freq.** | | | | | **Output Detector F1** | | | | | | **Output Detector F2** | | | | | |
|---|---|---|---|---|---|---|---|---|---|---|---|---|---|---|---|---|---|
| | **F1** | **F2** | **F3** | **F4** | **F5** | **DL** | **DM** | **DH** | **SL** | **SM** | **SH** | **DL** | **DM** | **DH** | **SL** | **SM** | **SH** |
| - | | | | | G | | | | | | | | | | | | |
| A (Low) | X | | | | | | | | A | | | | | | | | |
| B (Medium) | | X | | | | | | | | | | | | | | B | |
| A&B | | | X | | | | | | | | | | | | | | |
| C (Medium) | x | | | x | | | C | | | | | | | | | | |
| D (High) | | x | | x | | | | | | | | | | D | | | |
| C&D | | | x | x | | | | | | | | | | | | | |
| T | x | | x | | | | | T | | | | | | | | | |

| **Injected Commands** | **Transmitted Freq.** | | | | | **Output De tector F3** | | | | | | **Output Detector F4** | | | | | |
|---|---|---|---|---|---|---|---|---|---|---|---|---|---|---|---|---|---|
| | **F1** | **F2** | **F3** | **F4** | **F5** | **DL** | **DM** | **DH** | **SL** | **SM** | **SH** | **DL** | **DM** | **DH** | **SL** | **SM** | **SH** |
| - | | | | | G | | | | | | | | | | | | |
| A (Low) | X | | | | | | | | | | | | | | | | |
| B (Medium) | | X | | | | | | | | | | | | | | | |
| A&B | | | X | | | | | | A | B | | | | | | | |
| C (Medium) | x | | | x | | | | | | | | | C | | | | |
| D (High) | | x | | x | | | | | | | | | | D | | | |
| C&D | | | x | x | | | C | D | | | | | C | D | | | |
| T | x | | x | | | | | T | | | | | | | | | |

In the table, the columns entitled Transmitted Freq. have been discussed above, and the six columns DL, DM, DH, SL, SM, SH for each of the four tones F1, F2, F3, F4 or frequency detectors 41, 42, 43, 44 are to be read as follows: Protection commands A and B on their own are coded by one single-tone signal at the frequency F1 and F2, respectively. As soon as the detector 41 for F1 detects a signal with a safety value exceeding the first threshold, this is indicated at the detector output 414. As long as no other detector output is activated, the linking logic 5 indicates reception of protection command A. Likewise, reception of protection command B is indicated if detector output 425 is activated. When the commands A and B are transmitted in combination by a single-tone signal at frequency F3, reception of command A is already acknowledged and indicated at the command output 3a as soon as detector 43 reports a signal with a safety value exceeding the first threshold SL and activates the corresponding detector output 434.

Protection commands C and D are both coded by a dual-tone signal at F1-F4 and F2-F4 respectively. As soon as the signal detectors 41 and 44 independently detect a signal with a safety value exceeding the second threshold DM and indicate this at the detector outputs 412 and 442, respectively, the linking logic 5 indicates reception of command C at command output 3c. Likewise, reception of command D is acknowledged and indicated at command output 3d if detector outputs 423 and 443 are activated following the simultaneous detection of a signal with a safety value exceeding the third and highest threshold DH. The protection command C in combination with the protection command D is coded by a dual-tone signal at frequencies F3-F4. The reception of command C is detected as soon as a signal is detected with a safety value which is higher than the second threshold DM both in the third detector 43 and in the fourth detector 44. If the two security values later exceed even the third threshold DH, reception of command D is indicated at command output 3d in addition to the previous acknowledgement of command C.

In the abovementioned advantageous tone-sharing procedure, the modified frequency detectors 41 to 44 for tones which are used by two operating schemes with different nominal signal amplitudes have to have a corresponding triplet of threshold values L, M, H for each scheme. In Fig.9, this distinction is represented, where the lowest threshold DL stands for Dual-tone, Low security, and the highest threshold SH stands for Single-tone, High security. In any case, the activated detector outputs 411 to 446 are evaluated by the linking logic 5 by means of a matrix as depicted in the table above. In dual- or triple-tone coding, the two or three frequencies must be detected simultaneously, whereas for coded FSK, the two frequencies have to be acknowledged serially within a particular time window.

The method according to the invention can be used in an analogous manner for configurations with only two or with more than three distinct safety thresholds. A maximum number of protection commands can be transmitted with a minimum number of frequency detectors in a limited analog bandwidth, wherein any configuration, i.e. the assignment of an individual protection command to a coding scheme and/or tone combination, can be set and changed according the user's specification at any time.

### LIST OF DESIGNATIONS

- Amp: Amplitude
- f: Frequency
- t: Time axis
- A,B,C,D: Protection commands
- G: Guard signal, quiescent signal
- 1: Transmitter
- 1a,1b,1c: Command inputs
- 2: Signal link
- 3: Receiver
- 3a,3b,3c, 3d: Command outputs
- 41,42,43,44: Signal detectors
- 411,421,431: First detector outputs, dual tone
- 412,422,442: Second detector outputs, dual tone
- 413,423,443: Third detector outputs, dual tone
- 414,434: First detector outputs, single-tone or coded FSK tone
- 425,435,445: Second detector outputs, single-tone or coded FSK tone
- 426,436,446: Third detector outputs, single-tone or coded FSK tone
- 5: Linking logic

## Claims

1. A system for transmitting protection commands to a remote tripping device, including a transmitter (1), a signal link (2) with a transmission band comprising a plurality of tones (F1, F2, F3, F4) and a receiver (3) with a detector (41, 42, 43, 44) for each of the plurality of tones, wherein a protection command (A, B, C, D) or a combination of protection commands (A&B) is mapped to the tones according to one of at least two operating schemes, wherein each operating scheme is either variable-tone, single-tone, dual-tone, triple-tone, or coded FSK;
**characterized in that** the transmitter is adapted to map a first protection command or combination of protection commands according to a first operating scheme to at least one tone (F1), followed by mapping a second protection command or combination of protection commands according to a second operating scheme, distinct from the first operating scheme, to at least the at least one tone (F1).

2. The system according to claim 1, **characterized in that** the transmission band is an analog channel with voice frequency bandwidth.

3. The system according to claim 1, **characterized in that** the signal link involves a section of a power line.

4. A method of transmitting protection commands to a remote tripping device over a transmission band comprising a plurality of tones (F1, F2, F3, F4), wherein a protection command (A, B, C, D) or a combination of protection commands (A&B) is mapped to the tones according to one of at least two operating schemes, wherein each operating scheme is either variable-tone, single-tone, dual-tone, triple-tone, or coded FSK; and wherein the method comprises mapping a first protection command or combination of protection commands according to a first operating scheme to at least one tone (F1),
**characterized in that** the method comprises, following the mapping of the first protection command or combination of protection commands according to the first operating scheme to the at least one tone (F1), mapping a second protection command or combination of protection commands according to a second operating scheme, distinct from the first operating scheme, to at least the at least one tone (F1).

5. The method according to claim 4, **characterized in that** a transmission of a guard signal (G) is interrupted during transmission of a protection command (A).

6. The method according to claim 4, wherein a receiver (3) of a transmitted signal has a detector (41, 42, 43, 44) for each of the plurality of tones (F1, F2, F3, F4) which detects the presence of a tone-specific component in the transmitted signal, and wherein each protection command (A) is allocated a predetermined security level,
**characterized in that** a reception of a protection command (A) is acknowledged if the components of the signal coding the command individually (A) or in combination (A&B) with other protection commands are detected with a safety value exceeding a safety threshold (L, M, H) corresponding to the security level of the protection command (A).

## Patentansprüche

1. Ein System zum Übertragen von Schutzbefehlen zu einer entfernten Auslösevorrichtung mit einem Sender (1), einer Signalverbindung (2) mit einem Übertragungsband mit mehreren Tönen (F1, F2, F3, F4) und einem Empfänger (3) mit einem Detektor (41, 42, 43, 44) für jeden der mehreren Töne, wobei ein Schutzbefehl (A, B, C, D) oder eine Kombination von Schutzbefehlen (A&B) auf die Töne gemäß einem von mindestens zwei Betriebsschemata abgebildet wird, wobei jedes Betriebsschema entweder ein variabler Ton, ein Einzelton, ein Doppelton, ein Dreifachton oder eine codierte FSK ist;
**dadurch gekennzeichnet, dass** der Sender dazu ausgelegt ist, einen ersten Schutzbefehl oder eine Kombination von Schutzbefehlen gemäß einem ersten Betriebsschema auf mindestens einen Ton (F1), gefolgt von Abbildung eines zweiten Schutzbefehls oder einer Kombination von Schutzbefehlen gemäß einem zweiten Betriebsschema, das sich von dem ersten Betriebsschema unterscheidet, auf mindestens den mindestens einen Ton (F1) abzubilden.

2. Das System nach Anspruch 1, **dadurch gekennzeichnet, dass** das Übertragungsband ein analoger Kanal mit einer Sprachfrequenzbandbreite ist.

3. Das System nach Anspruch 1, **dadurch gekennzeichnet, dass** die Signalverbindung einen Abschnitt einer Stromleitung beinhaltet.

4. Ein Verfahren zum Übertragen von Schutzbefehlen zu einer entfernten Auslösevorrichtung über ein Übertragungsband mit mehreren Tönen (F1, F2, F3, F4), wobei ein Schutzbefehl (A, B, C, D) oder eine Kombination von Schutzbefehlen (A&B) auf die Töne gemäß einem von mindestens zwei Betriebsschemata abgebildet wird, wobei jedes Betriebsschema entweder ein variabler Ton, ein Einzelton, ein Doppelton, ein Dreifachton oder eine codierte FSK ist; und wobei das Verfahren das Abbilden eines ersten Schutzbefehls oder einer Kombination von Schutzbefehlen gemäß einem ersten Betriebsschema auf mindestens einen Ton (F1) umfasst,
**dadurch gekennzeichnet, dass** das Verfahren nach der Abbildung des ersten Schutzbefehls oder der Kombination von Schutzbefehlen gemäß dem ersten Betriebsschema auf den mindestens einen Ton (F1) die Abbildung eines zweiten Schutzbefehls oder einer Kombination von Schutzbefehlen gemäß einem zweiten Betriebsschema, das sich von dem ersten Betriebsschema unterscheidet, auf mindestens den mindestens einen Ton (F1) umfasst.

5. Das Verfahren nach Anspruch 4, **dadurch gekennzeichnet, dass** eine Übertragung eines Schutzsignals (G) während der Übertragung eines Schutzbefehls (A) unterbrochen wird.

6. Das Verfahren nach Anspruch 4, wobei ein Empfänger (3) eines übertragenen Signals einen Detektor (41, 42, 43, 44) für jeden der mehreren Töne (F1, F2, F3, F4) aufweist, der die Anwesenheit einer tonspezifischen Komponente im übertragenen Signal detektiert, und wobei jedem Schutzbefehl (A) ein vorbestimmtes Sicherheitsniveau zugeordnet ist,
**dadurch gekennzeichnet, dass** ein Empfang eines Schutzbefehls (A) bestätigt wird, wenn die Komponenten des Signals, die den Befehl codieren, individuell (A) oder in Kombination (A&B) mit anderen Schutzbefehlen mit einem Sicherheitswert detektiert werden, der einen Sicherheitsschwellenwert (L, M, H) entsprechend dem Sicherheitsniveau des Schutzbefehls (A) übersteigt.

## Revendications

1. Un système d'émission de commandes de protection à un dispositif de déclenchement à distance, comportant un émetteur (1), une liaison de signal (2) ayant une bande d'émission comprenant une pluralité de tonalités (F1, F2, F3, F4) et un récepteur (3) à détecteur (41, 42, 43, 44) pour chacune de la pluralité de tonalités, dans lequel une commande de protection (A, B, C, D) ou une combinaison de commandes de protection (A & B) est mise en correspondance avec les tonalités selon l'un d'au moins deux plans opérationnels, dans lequel chaque plan opérationnel est soit à tonalité variable, soit à tonalité unique, soit à double tonalité, soit à triple tonalité, soit à déplacement de fréquence codée ;
**caractérisé en ce que** l'émetteur est adapté pour mettre en correspondance une première commande de protection ou une combinaison de commandes de protection en fonction d'un premier plan opérationnel avec au moins une tonalité (F1), suivi par la mise en correspondance d'une seconde commande de protection ou une combinaison de commandes de protection en fonction d'un second plan opérationnel, distinct du premier plan opérationnel, avec au moins l'au moins une tonalité (F1).

2. Le système selon la revendication 1, **caractérisé en ce que** la bande d'émission est un canal analogique à bande passante de fréquence vocale.

3. Le système selon la revendication 1, **caractérisé en ce que** la liaison de signal implique une section d'une ligne de puissance.

4. Un procédé d'émission de commandes de protection à un dispositif de déclenchement à distance sur une bande d'émission comprenant une pluralité de tonalités (F1, F2, F3, F4), dans lequel une commande de protection (A, B, C, D) ou une combinaison de commandes de protection (A & B) est mise en correspondance avec les tonalités selon l'un d'au moins deux plans opérationnels, dans lequel chaque plan opérationnel est soit à tonalité variable, soit à tonalité unique, soit à double tonalité, soit à triple tonalité, soit à déplacement de fréquence codée ; et le procédé comprenant la mise en correspondance d'une première commande de protection ou d'une combinaison de commandes de protection en fonction d'un premier plan opérationnel avec au moins une tonalité (F1),
**caractérisé en ce que** le procédé comprend, après la mise en correspondance de la première commande de protection ou de la combinaison de commandes de protection en fonction du premier plan opérationnel avec l'au moins une tonalité (F1), la mise en correspondance d'une seconde commande de protection ou une combinaison de commandes de protection en fonction d'un second plan opérationnel, distinct du premier plan opérationnel, avec au moins l'au moins une tonalité (F1).

5. Le procédé selon la revendication 4, **caractérisé en ce qu'**une émission d'un signal de garde (G) est interrompue durant l'émission d'une commande de protection (A).

6. Le procédé selon la revendication 4, dans lequel un récepteur (3) d'un signal émis comporte un détecteur (41, 42, 43, 44) pour chacune de la pluralité de tonalités (F1, F2, F3, F4) qui détecte la présence d'une composante spécifique à une tonalité dans le signal émis, et dans lequel un niveau de sécurité prédéterminé est attribué à chaque commande de protection (A),
**caractérisé en ce qu'**il est accusé réception d'une commande de protection (A) si les composantes du signal codant la commande individuellement (A) ou en combinaison (A & B) avec d'autres commandes de protection sont détectées avec une valeur de sécurité dépassant un seuil de sécurité (bas, moyen, haut) correspondant au niveau de sécurité de la commande de protection (A).
